# EUROPEAN PATENT SPECIFICATION

(11) **EP 2 844 381 B1**
(45) Date of publication and mention of the grant of the patent: **19.09.2018**
(21) Application number: 13721875.6
(22) Date of filing: 29.04.2013
(51) Int. Cl.: B01F 3/04, B01F 7/00, B29B 7/40, B29B 7/74, B01F 15/06

(54) **RADIAL-FLOW ROTOR-STATOR MIXER AND PROCESS TO PRODUCE POLYMERIC FROTHS**
ROTOR/STATOR-MISCHER MIT RADIALDURCHFLUSS UND VERFAHREN ZUR HERSTELLUNG VON POLYMERSCHÄUMEN
MÉLANGEUR À ROTOR-STATOR À FLUX RADIAL ET PROCÉDÉ POUR PRODUIRE DES MOUSSES DE POLYMÈRE

(30) Priority: 02.05.2012 US 201261641499 P
(43) Date of publication of application: 11.03.2015
(73) Proprietor: Dow Global Technologies LLC, Midland, MI 48674 (US); Rohm and Haas Electronic Materials CMP Holdings, Inc., Newark, DE 19713 (US)
(72) Inventor: GILLIS, Paul, A., Lake Jackson, TX 77566 (US); PARSONS, Thomas, J., Midland, MI 48642 (US); XIE, Jia, Hefei Anhui Province 230011 (CN); FAROZIC, Vince, Phoenixville, PA 19460 (US)
(74) Representative: Beck Greener
(86) International application number: PCT/US2013/038661
(87) International publication number: WO 2013/165906

(56) References cited:
- EP-A1- 0 830 894
- EP-A1- 0 830 894
- EP-A1- 0 830 894
- WO-A2-2008/077116
- WO-A2-2008/077116
- WO-A2-2008/077116
- GB-A- 729 514
- GB-A- 729 514
- JP-A- H02 144 136
- JP-A- H02 144 136
- JP-A- H02 144 136
- JP-A- S58 175 637
- JP-A- S58 175 637
- US-A- 2 685 436
- US-A- 2 685 436
- US-A- 2 695 246
- US-A- 2 695 246
- US-A1- 2005 053 532
- US-A1- 2005 053 532
- US-A1- 2005 053 532

## Description

### BACKGROUND OF THE INVENTION

### 1. Field of the Invention

The invention relates to rotor-stator mixers. In one aspect the invention relates to a rotor-stator mixer with multiple secondary inlets while in another aspect, the invention relates to a process for using a rotor-stator mixer with multiple secondary inlets to produce gas-in-liquid dispersions with a small average bubble diameter and a narrow bubble size distribution.

### 2. Description of the Related Art

The bubble size in a gas-in-liquid dispersion, such as a polymeric froth, depends on both fluid physical properties (viscosity, interfacial tension, etc.) and rotor-stator mixer hydrodynamics (shear rate, duration, etc.). Standard rotor-stator mixers have a single inlet stream and a single outlet stream. Some standard rotor-stator mixers are modified to have one or more secondary inlets such as that taught in WO 2008/077116. While both standard and modified rotor-stator mixers produce functional polymeric froths, an interest continues for a rotor-stator mixer that produces a polymeric froth with a smaller average bubble size and a narrower bubble size distribution than that produced with the rotor-stator mixers available today.

EP-A-830894 discloses a mixer reactor having separate inlets for at least two substances. JP H02 144136 discloses an axial flow mixer having a gear tooth in the axis of rotation, opposed by a stator. US2005/053532 discloses a spinning disc reactor in which a first reactant forms a thin film on a surface and a second reactant is fed to the surface in the form of a second thin film.

### SUMMARY OF THE INVENTION

In one embodiment the invention is a radial-flow rotor-stator mixer comprising:
A. a housing comprising a first stator and a second stator;
B. a rotor positioned between the first stator and the second stator so as to form a first pass between the rotor and the first stator and a second pass between the rotor and the second stator within the housing and to provide fluid communication between the first and second passes, the rotor connected to a rotatable shaft;
C. a primary inlet to the first pass at a low shear region;
D. only four secondary inlets to the first pass at one or more regions of higher shear than that of the primary inlet with the proviso that three of the secondary inlets are equally spaced about the first stator and communicate with the first pass at or near the maximum distance from the rotatable shaft; and
E. an outlet from the second pass.

The mixers of this invention take advantage of the variable shear field within the first pass, and they provide a means of fluid addition at a number of locations within the first pass of the device. These regions differ in stator radius and hence are characterized by different shear rate levels. Furthermore, the addition of fluids of dissimilar density or viscosity, e.g., gas and liquid, form a more stable mixture when injected into a region of higher shear than when injected into a region of lower shear.

In one embodiment the invention is a process of producing a polymeric froth using the mixer of the present invention comprising the steps of:
1. introducing through the primary inlet a first feed comprising a liquid into a first shear region of the first pass, the first feed comprising a monomer, prepolymer or polymer;
2. introducing through one or more of the secondary inlets a second feed comprising a gas into a second shear region of the first pass, the second shear region of a greater shear than the shear of the first shear region;
3. forming a froth of the first and second feeds within the first pass;
4. transferring the froth from the first pass to the second pass; and
5. ejecting the froth through the outlet of the mixer.

In one process, the first feed is introduced near the shaft of the mixer and additional feeds are introduced through two or more secondary inlets such that it enters the mixer in the first pass at a distance along the first stator distal to the shaft.

### BRIEF DESCRIPTION OF THE DRAWINGS

The invention is described generally with reference to the drawings for the purpose of illustrating certain embodiments only, and not for the purpose of limiting the scope of the invention. In the drawings like numerals are used to designate like parts throughout the same.
Figure 1A is a cross-section of a standard radial-flow, rotor-stator mixer modified with two secondary inlets position at high shear regions of the mixer relative to the primary inlet.
Figure 1B is a sectional view of Figure 1A taken along line 1B-1B with the rotor positioned within the space between the two stators.
Figure 1C is a sectional view of Figure 1A taken along line 1B-1B with the rotor removed from the space between the two stators.
Figure 2 is a plain view of a first stator of the mixer of the present invention.

### DETAILED DESCRIPTION OF THE PREFERRED EMBODIMENT

### Definitions

Unless stated to the contrary, implicit from the context, or customary in the art, all parts and percents are based on weight and all test methods are current as of the filing date of this disclosure.

The numerical ranges in this disclosure are approximate, and thus may include values outside of the range unless otherwise indicated. Numerical ranges include all values from and including the lower and the upper values, in increments of one unit, provided that there is a separation of at least two units between any lower value and any higher value. As an example, if a compositional, physical or other property, such as, for example, molecular weight, etc., is from 100 to 1,000, then all individual values, such as 100, 101, 102, etc., and sub ranges, such as 100 to 144, 155 to 170, 197 to 200, etc., are expressly enumerated. For ranges containing values which are less than one or containing fractional numbers greater than one (e.g., 1.1, 1.5, etc.), one unit is considered to be 0.0001, 0.001, 0.01 or 0.1, as appropriate. For ranges containing single digit numbers less than ten (e.g., 1 to 5), one unit is typically considered to be 0.1. These are only examples of what is specifically intended, and all possible combinations of numerical values between the lowest value and the highest value enumerated, are to be considered to be expressly stated in this disclosure. Numerical ranges are provided within this disclosure for, among other things, molecular weight.

"Fluid communication" and like terms mean that a fluid, e.g., a liquid, gas, etc., can pass directly and without interruption from one defined area to another defined area. For example, liquid can pass from the primary inlet into the annular chamber, and then into the first pass through the connecting channel into the second pass, and then through the outlet directly and without interruption. Each area of the mixer is in fluid communication with the other.

"Radial" and like terms mean, in the context of a radial-flow, rotor-stator mixer, the normal (i.e., perpendicular) direction from the rotor shaft.

"Radial-flow" and like terms mean the path traveled by a fluid entering the first pass at or near the rotor shaft, up or away from the rotor shaft along the first pass to a region most distal from the rotor shaft and/or from a region in the second pass most distal from the rotor shaft down and towards a region in the second pass at or near the rotor shaft.

"Pass" and like terms mean the flow path or channel defined by the opposing but not touching surfaces of the stator and the rotor. The first pass is the flow path defined by the facial surface of the first stator and the opposing surface of the rotor. A fluid in the first pass moves from the low shear region at or near the rotor shaft, i.e., at or near the rotor-stator center, to the high shear region at or near the periphery of the rotor-stator, i.e., at or near the juncture of the first path and the connecting channel or, in other words, at or near the point on the first pass furthest from the rotor shaft. The second pass is the flow path defined by the facial surface of the second stator and the opposing surface of the rotor. A fluid in the second pass moves from the high shear region at or near the periphery of the rotor-stator, i.e., at or near the juncture of the connecting channel and the second pass or, in other words, at or near the point on the second pass furthest from the rotor shaft, to the mixer outlet which is typically at or near the center of the rotor-stator. As a consequence and in the context of this invention, a fluid moves through the rotor-stator mixer by entering the first pass in a region of low shear, moves through an increasing shear gradient in the first pass, passes over to the second pass by way of the connecting channel, passes down the second pass through a decreasing shear gradient, leaves the second pass from a region of low shear, and exits the mixer through the mixer outlet.

"Shear" and like terms mean the velocity gradient imparted to a fluid (liquid, gas or both) as it moves through the first and second passes of the rotor-stator mixer. The shear rate is a result of a combination of factors including, but not limited to, the size, length and configuration of the pass, the facial configurations of the stators and rotor, the rotational speed of the rotor, the viscosity and speed of the fluid, the pressure on the fluid within the passes, etc.

"Shear region" and like terms mean a space or volume within a pass in which a fluid has a shear stress, i.e., the component of stress coplanar with a cross section of the fluid. Shear stress arises from the force vector component parallel to the cross section. Normal stress, on the other hand, arises from the force vector component perpendicular to the material cross section on which it acts. For purposes of this disclosure, shear region applies to the space or volume within a pass whether or not a fluid is moving through the pass.

"High shear region", "low shear region" and the like are relative terms used to designate a space or volume in a pass relative to other spaces or volumes within the pass whether or not a fluid is moving through the pass. High shear regions are spaces or volumes in a pass in which a fluid moving through that space or volume is under a larger or greater shear stress than when the fluid is moving through at least one other region within the pass. The further a fluid moves through the pass and away from the center of the rotor-stator, the greater the shear stress the fluid will experience. Thus, of two regions of similar size along a pass, the region furthest from the rotor-stator center will be the high shear region and the region closest to the rotor-stator center will be the low shear region.

### Radial-Flow, Rotor-Stator Mixer

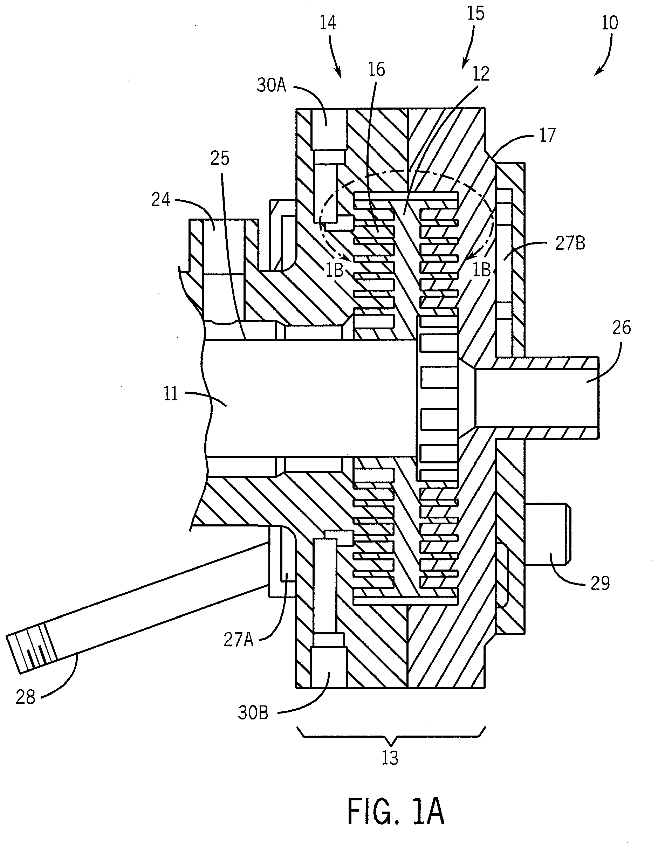

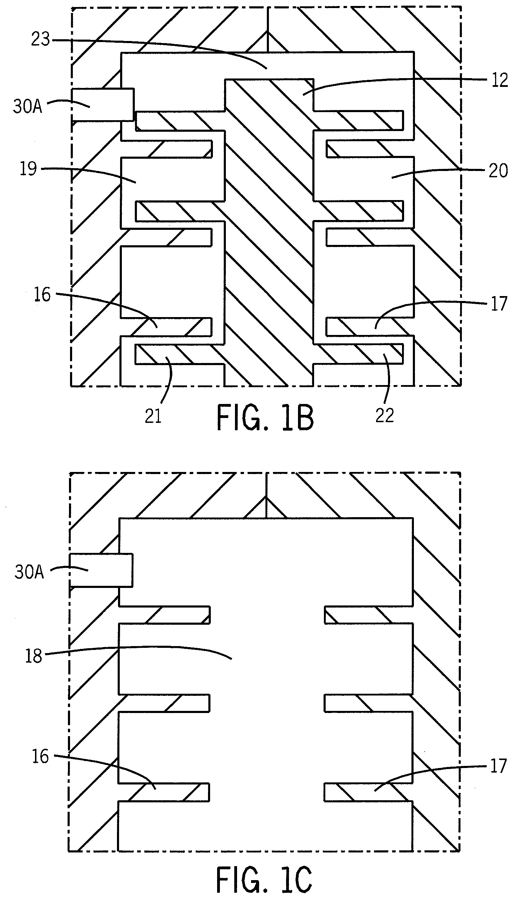

Referring to Figure 1A, radial-flow, rotor-stator mixer 10 comprises rotor shaft 11 connected to rotor 12 and a motor (not shown) that causes it and the rotor to rotate. Rotor 12 is positioned within housing 13, and housing 13 comprises first housing section 14 joined by means 31 to second housing section 15. First housing section 14 comprises first stator 16, and second housing section 15 comprises second stator 17. The first and second stators are positioned opposite one another defining volume 18 (Figure 1C) between them which is occupied by rotor 12. Rotor 12 divides volume 18 into first pass or channel 19 and second pass or channel 20 (Figure 1B), both passes of very small volume in that rotor first surface 21 is positioned within close proximity to first stator 16 and rotor second surface 22 is positioned within close proximity to second stator 17. The two housing sections can be decoupled from one another to provide access to the rotor and stators.

Primary inlet 24 is in fluid communication with annular chamber 25 that encircles rotor shaft 11. Annular chamber 25, in turn, is in fluid communication with first pass 19, first pass 19 is in fluid communication with second pass 20 by way of connecting channel 23, and second pass 20 is in fluid communication with outlet 26. Thus, a liquid can pass through mixer 10 by entering through primary inlet 24, passing into and through annular chamber 25, into and through first pass 19, cross-over to second pass 20 through connecting channel 23, and out through outlet 26.

First housing section 14 is equipped with first cooling jacket 27A and second housing section 15 is equipped with second cooling jacket 27B. First cooling jacket 27A attaches to first housing section 14 proximate to first stator 16 and cooling fluid (not shown) is circulated through it by first cooling fluid inlet 28 and first cooling fluid outlet (not shown). Second cooling jacket 27B attaches to second housing section 15 proximate to second stator 17 and cooling fluid (not shown) is circulated through it by second cooling fluid inlet 29 and second cooling fluid outlet (not shown).

First housing section 14 comprises first secondary inlet 30A which is in fluid communication with first pass 19 and second secondary inlet 30B which is also in fluid communication with first pass 19. Important to this invention is that the secondary inlets feed into the first pass at regions of shear greater than the region in which the annular chamber feeds into the first pass. The first and second passes are regions of variable shear. Due to the rotation of the rotor, the shear is lowest in both passes nearest the shaft and greatest in both passes furthest or most distal from the shaft.

In Figure 1A, liquid entering the first chamber from annular chamber 25 enters at or near rotor shaft 11 and thus enters into a region of the first pass which is at low shear relative to the regions positioned further from the rotor shaft. Fluid entering the first pass from second secondary inlet 30B enters about half way up first stator 16 and thus enters into the first pass in a region of shear greater relative to the shear in the regions of the first pass closer to rotor shaft 11. Fluid entering the first pass from first secondary inlet 30A enters at or near the end of first stator 20 into a region most distal from rotor shaft 11, and thus enters into the region of shear greatest relative to the shear in the region of the first pass closest to rotor shaft 11.

Although not shown in the figures, radial-flow, rotor-stator mixer 10 can be equipped with more than two secondary inlets. These optional additional inlets also feed into the first pass at regions of shear greater than that which is fed by the annular chamber. Each secondary inlet can feed into the same or different region of the first pass as one or more of the other secondary inlets as long as each feed into a region of shear greater than the shear of the region into which the annular chamber feeds. Positioning one or more of the secondary inlets to feed gas into the region of the first pass into which the annular chamber feeds the liquid is disfavored because the froth made by the mixer tends to have more larger bubbles and a bubble size distribution greater than that of a froth made when all of the secondary inlets feed gas into regions with a greater shear than that of the region into which the liquid is fed.

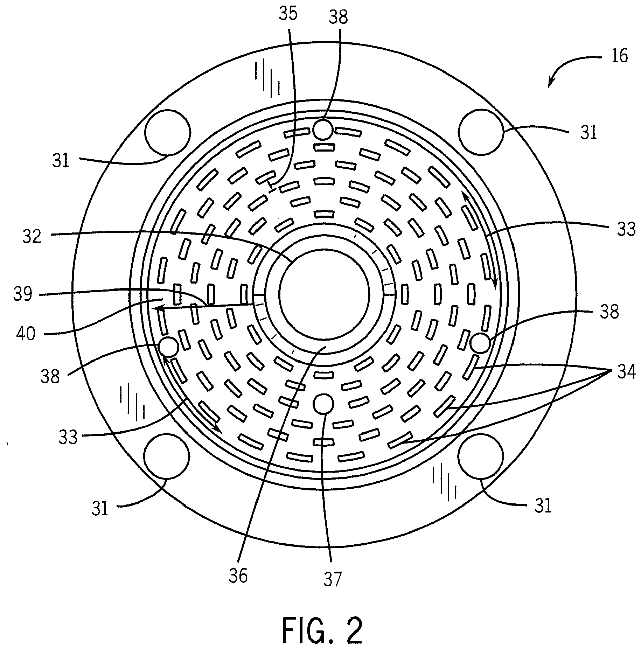

Radial-flow, rotor-stator mixer 10 of the present invention is further described with reference to Figure 2. Referring to Figure 2, first stator 16 may have any shape; for example, first stator 16 may have a circular shape. First stator 16 may further include central channel 32. First stator 16 may be provided with any number of generally ring-shaped stator teeth 33; for example, first stator 16 may be provided with at least two generally ring-shaped stator teeth 33. Each generally ring-shaped stator teeth 33 is provided with multiple comb-shaped teeth 34 in a circumferential direction. Generally ring-shaped stator teeth 33 may further be spaced apart any distance 35 from each other.

First stator 16 includes first stator inlet port 36 which is in fluid communication with primary inlet 24 via annular chamber 25, first stator inlet port 37 which is in fluid communication with second secondary inlet 30B, and first stator inlet port 38 which is in fluid communication with first secondary inlet 30A (in Figure 2, first stator 16 is shown with three inlet ports 38 illustrating an embodiment not shown in Figures 1A-1C in which rotor-stator mixer 10 is equipped with four secondary inlets of which three are equally spaced about the first stator at or near the maximum distance on the first pass from the rotor shaft). Figure 2 also illustrates means 31 for joining or coupling the first housing section which comprises the first stator to the second housing section (not shown in Figure 2) which comprises the second stator. Means 31 for joining or coupling the two sections include, but are not limited to, interlocking mechanisms, nuts and bolts, and screws.

Shear gradient arrow 39 indicates the direction of increasing shear along the first pass, or in other words, along the radius of first stator 16. Shear is at its lowest nearest central channel 32 through which rotor shaft 11 (not shown) passes and greatest at or near outer perimeter 40.

The configuration of second stator 17 can be the same or different from the configuration of the first stator. Typically, the configuration is similar, if not the same. The faces of the rotor compliment the configuration of the stators of which they are opposite. The shear gradient arrow of the second pass is the same for second pass although due to differences in stator configurations and/or other factors, the shear of any one particular region in the first pass may be different, typically greater, than the shear stator in the corresponding region of the second pass.

Rotor 12 includes means (not shown) for coupling to rotor shaft 11 (Figure 1) which, in turn, is coupled to a power source, for example, an electric motor (not shown) for imparting rotational movement to the rotor. Means for coupling the rotor to the rotor shaft include, but are not limited to, interlocking mechanisms, nuts and bolts, and screws.

### Process of Forming a Polymeric Froth

In one embodiment, a first prepolymer phase with reactive hydrogen functionality e.g., a polyol, is introduced into the first pass via primary inlet 24 while a second prepolymer phase with isocyanate functionality is introduced into the first pass via secondary inlet 30B in the presence of a surfactant and, optionally a catalyst, which either or both can be introduced separately through other secondary inlets or combined with one or both of the first and second prepolymer phases. The froth results from the introduction of an inert gas into the first pass through a secondary inlet 30A in a high shear region of the first pass relative to the shear region into which the first prepolymer phase is introduced. Those skilled in the art recognize that the first and second prepolymer phases can be reversed in the context in which they are introduced into the first pass and/or split among multiple inlets. An important feature of this invention is that the inert gas is introduced into the first pass into a region of high shear relative to the region into which the reactive components are introduced. In other embodiments the order of shear addition is varied, e.g., polyol is added at low shear, gas is added at medium shear, and isocyanate is added at high shear.

The reacting mixture combines with an inert gas to form a forth of liquid mixture with entrained, finely divided bubbles of uniform size. The froth is first formed in the first pass, and then transfers to the second pass which has a shear gradient similar to the first chamber by way of the radial passage at the distal end of the rotor. In the first pass the reacting mixture travels a first path from relatively low shear to relatively high shear, over and through the radial passage and then down and through the second chamber from a region of relatively high shear to relatively low shear, and finally the polyurethane froth leaves the second chamber and mixer via outlet port 23. The residence time of the materials within the mixer, i.e., both passes, from inlet to outlet, can vary with the nature of the materials, operating conditions of the mixer, but typically the residence time is from a few seconds to less than a minute.

The term isocyanate prepolymer phase refers to a liquid containing substantially no organic solvent and also has at least two isocyanate groups per one molecule. Such an isocyanate prepolymer further refers to isocyanate prepolymer in which the content of the organic solvent in the prepolymer is 10 percent by weight or less based on the total weight of the prepolymer phase. To eliminate the step of removing the organic solvent, the content of the organic solvent may, for example, be 5 percent by weight or less based on the total weight of the prepolymer phase; or in the alternative, the content of the organic solvent may be 1 percent by weight or less based on the total weight of the prepolymer phase; or in another alternative, the content of the organic solvent may be 1 percent by weight or less based on the total weight of the prepolymer phase. In a preferred embodiment, the isocyanate prepolymer phase does not contain any solvent.

The number average molecular weight of the isocyanate prepolymer used in the present invention may, for example, be within the range from monomeric materials to prepolymers with a number average molecular weight (Mn) of 1,000 to 200,000, typically 1,000 to 50,000 on a solvent-free basis.

The isocyanate prepolymer used in the present invention may be produced by any conventionally known processes, for example, solution process, hot melt process, or prepolymer mixing process. Furthermore, the isocyanate prepolymer may, for example, be produced via a process for reacting a polyisocyanate compound with an active hydrogen-containing compound and examples include, but are not limited to, (i) a process for reacting a polyisocyanate compound with a polyol compound without using an organic solvent, and (ii) a process for reacting a polyisocyanate compound with a polyol compound in an organic solvent, followed by removal of the solvent.

Examples of the polyisocyanate compound include 2,4-tolylene diisocyanate, 2,6-tolylene diisocyanate, m-phenylene diisocyanate, p-phenylene diisocyanate, 4,4'-diphenylmethane diisocyanate, 2,4'-diphenylmethane diisocyanate, 2,2'-diphenylmethane diisocyanate, 3,3'-dimethyl-4,4'-biphenylene diisocyanate, 3,3'-dimethoxy-4,4'-biphenylene diisocyanate, 3,3'-dichloro-4,4'-biphenylene diisocyanate, 1,5-naphthalene diisocyanate, 1,5-tetrahydronaphthalene diisocyanate, tetramethylene diisocyanate, 1,6-hexamethylene diisocyanate, dodecamethylene diisocyanate, trimethylhexamethylene diisocyanate, 1,3-cyclohexylene diisocyanate, 1,4-cyclohexylene diisocyanate, xylylene diisocyanate, tetramethylxylylene diisocyanate, hydrogenated xylylene diisocyanate, lysine diisocyanate, isophorone diisocyanate, 4,4'-dicyclohexylmethane diisocyanate, 3,3'-dimethyl-4,4'-dicyclohexylmethane diisocyanate, isomers thereof, and/or combinations of two or more of these.

The active hydrogen-containing prepolymer used in the present invention includes, but is not limited to, a compound having comparatively high molecular weight ("high-molecular weight compound") and a compound having comparatively low molecular weight ("low-molecular weight compound").

The Mn of the high-molecular weight compound may, for example, be within a range from 300 to 50,000; or in the alternative, within a range from 500 to 5,000. The number average molecular weight of the low-molecular weight compound may, for example, be less than 300. These active hydrogen-containing compounds may be used alone, or two or more kinds of them may be used in combination.

Among these active hydrogen-containing compounds, examples of the high-molecular weight compound include, but are not limited to aliphatic and aromatic polyester polyols including caprolactone based polyester polyols, seed oil based polyester polyols, any polyester/polyether hybrid polyols, PTMEG-based polyether polyols; polyether polyols based on ethylene oxide, propylene oxide, butylene oxide and mixtures thereof; polycarbonate polyols; polyacetal polyols, polyacrylate polyols; polyesteramide polyols; polythioether polyols; polyolefin polyols such as saturated or unsaturated polybutadiene polyol, polythioether polyol, polyolefin polyols such as polybutadiene polyol, and so on. The active hydrogen containing compounds may also comprise primary and secondary amines, or prepolymers terminated with a primary or secondary amine.

As the polyester polyol, polyester polyol, for example, obtained by the polycondensation reaction of a glycol and an acid may be used.

Examples of the glycol, which can be used to obtain the polyester polyol, include, but are not limited to, ethylene glycol, propylene glycol, 1,3-propanediol, 1,4-butanediol, 1,5-pentanediol, 3-methyl-1,5-pentanediol, 1,6-hexanediol, neopentyl glycol, diethylene glycol, triethylene glycol, tetraethylene glycol, polyethylene glycol, dipropylene glycol, tripropylene glycol, bishydroxyethoxybenzene, 1,4-cyclohexanediol, 1,4-cyclohexanedimethanol, bisphenol A, mixture of 1,3- and 1,4-cyclohexanedimethanol (UNOXOL™-diol), hydrogenated bisphenol A, hydroquinone, and alkylene oxide adducts thereof. These low molecular weight species can also be used directly in the mixer as can their analogous amines.

Examples of the acid, which can be used to obtain the polyester polyol, include, but are not limited to, succinic acid, adipic acid, azelaic acid, sebacic acid, dodecanedicarboxylic acid, maleic anhydride, fumaric acid, 1,3-cyclopentanedicarboxylic acid, 1,4-cyclohexanedicarboxylic acid, terephthalic acid, isophthalic acid, phthalic acid, 1,4-naphthalenedicarboxylic acid, 2,5-naphthalenedicarboxylic acid, 2,6-naphthalenedicarboxylic acid, naphthalic acid, biphenyldicarboxylic acid, 1,2-bis(phenoxy)ethane-p,p'-dicarboxylic acid, and anhydrides or ester- forming derivatives of these dicarboxylic acids; and p-hydroxybenzoic acid, p-(2-hydroxyethoxy)benzoic acid, and ester-forming derivatives of these hydroxycarboxylic acids.

Also polyester obtained by the ring-opening polymerization reaction of a cyclic ester compound such as C-caprolactone, and copolyesters thereof may be used.

Examples of the polyether polyol include, but are not limited to, compounds obtained by the poly-addition reaction of one or more kinds of compounds having at least two active hydrogen atoms such as ethylene glycol, diethylene glycol, triethylene glycol, propylene glycol, trimethylene glycol, 1,3-butanediol, 1,4-butanediol, 1,6-hexanediol, neopentyl glycol, glycerin, trimethylolethane, trimethylolpropane, sorbitol, sucrose, aconite saccharide, trimellitic acid, hemimellitic acid, phosphoric acid, ethylenediamine, diethylenetriamine, triisopropanolamine, pyrogallol, dihydroxybenzoic acid, hydroxyphthalic acid, and 1,2,3-propanetrithiol with one or more kinds among ethylene oxide, propylene oxide, butylene oxide, styrene oxide, epichlorohydrin, tetrahydrofuran, and cyclohexylene.

Examples of the polycarbonate polyol include, but are not limited to, compounds obtained by the reaction of glycols such as 1,4-butanediol, 1,6-hexanediol, and diethylene glycol, with diphenyl carbonate and phosgene.

Among the active hydrogen-containing compounds, the low-molecular weight compound is a compound which has at least two active hydrogens per one molecule and has a number average molecular weight of less than 300, and examples thereof include, but are not limited to, glycol components used as raw materials of the polyester polyol; polyhydroxy compounds such as glycerin, trimethylolethane, trimethylolpropane, sorbitol, and pentaerythritol; and amine compounds such as ethylenediamine, 1,6-hexamethylenediamine, piperazine, 2,5-dimethylpiperazine, isophoronediamine, 4,4'-dicyclohexylmethanediamine, 3,3'-dimethyl-4,4'-dicyclohexylmethanedi-amine, 1,4-cyclohexanediamine, 1,2 propanediamine, hydrazine, diethylenetriamine, and triethylenetetra-amine.

The term "surfactants," as used herein, refers to any compound that reduces surface tension between a liquid and a gas. Non-ionic surfactants are useful in the practice of this invention and include, but are not limited to, block copolymers containing ethylene oxide and silicone surfactants, such as ethoxylated alcohol, ethoxylated fatty acid, sorbitan derivative, lanolin derivative, ethoxylated nonyl phenol or alkoxylated polysiloxane. Such surfactants may contain reactive hydrogen functionality so that they may be incorporated into the growing polymer.

Polyurethane prepolymers are typically chain extended with a chain extender which are well known to those skilled in the art.

The catalysts used in the practice of this invention include metal-based catalysts, e.g., tin derivatives and tertiary amines. The inert gases used in the practice of this invention include, but are not limited to, noble gases, nitrogen, carbon dioxide and any other gas that does not react with the other components of the mixture under mixing conditions. The amount of gas and rate of gas addition will vary with the application. Maximum gas content is determined by the ability to maintain the liquid as the continuous phase. Minimum gas content is determined by the requirements of the final application. Liquids are added without gas, i.e., no gas in the liquids before entrance into the first pass. Typically if gas and liquid streams are simply joined (e.g., mixed at a T-junction of intersecting pipes), non-uniform froths are formed as shown in Example 1.

### SPECIFIC EMBODIMENTS

### Example 1: Flow stabilization

A polyurethane froth was generated in an Oakes mixer by the reactive mixing of an isocyanate prepolymer with a polyether polyol. Nitrogen was used as the frothing gas and Jeffamine was added to the formulation. A standard 4" Oakes mixer was modified to permit the staging of reactant streams. The mass flow of isocyanate, polyol, Jeffamine, and gas were 180, 410, 9, 0.26 g/min respectively. The polyol and Jeffamine were mixed and entered the rotor-stator mixer along the shaft. The isocyanate and gas streams were combined at a T-junction pipe intersection and fed into the Oakes mixer at the next inlet. During operation of this configuration, transient gas flow was observed on the gas flow meter upstream of the mixer. The oscillations varied in both period and amplitude. Some oscillations lasted up to 60 seconds. The magnitude of the change in gas flow was up to 80%. In order to steady the gas flow, the gas inlet location was moved into a staged inlet (between the 5 and 6 rows of rotor teeth). This change nearly eliminated the gas flow oscillations. The gas flow was very steady with only a <5% change in flow observed after this change.

### Example 2: Reagent Staging

A polyurethane froth was generated in a modifed Oakes mixer by the reactive mixing of an isocyanate prepolymer with a polyether polyol. Nitrogen was used as the frothing gas and Jeffamine was added to the formulation. A standard 4" Oakes mixer was modified to permit the staging of reactant streams in three additional locations on the first pass and two additional locations on the second pass. A diagram, Figure 1A, of the modified mixer is included in this patent application. The mass flow of isocyanate, polyol, Jeffamine, and gas were 180, 410, 9, 0.25 g/min respectively. Initially, the reactants were brought through the standard inlet ports of a standard Oakes mixer with the exception of the gas which was staged to improve flow stability. With this configuration, a bubble size of 76 microns with a standard deviation of 41 microns was observed.

A second configuration was explored where the reactant stream were staged (entered separated into the mixer with variable residence times). The flow rates and experimental conditions were held constant and the polyol entered the rotor-stator mixer at the primary inlet location. The three staged inlets on the first pass of the Oakes mixer contained the isocyanate, Jeffamine and nitrogen. A catalyst entered the device on a second pass inlet. This configuration reduced the bubble size in the product froth to 51 microns with a standard deviation of 22 microns.

Although the invention has been described with certain detail through the preceding description of the preferred embodiments, this detail is for the primary purpose of illustration.

## Claims

1. A radial-flow rotor-stator mixer (10) comprising:
A. a housing (13) comprising a first stator (16) and a second stator (17);
B. a rotor (12) positioned between the first stator (16) and the second stator (17) so as to form a first pass (19) between the rotor and the first stator and a second pass (20) between the rotor and the second stator within the housing (13) and to provide fluid communication between the first and second passes (19), (20), the rotor (12) connected to a rotatable shaft (11);
C. a primary inlet (24) to the first pass (19) at a low shear region;
D. only four secondary inlets (37, 38) to the first pass (19) at one or more regions of higher shear than that of the primary inlet (24) with the proviso that three of the secondary inlets (38) are equally spaced about the first stator and communicate with the first pass (19) at or near the maximum distance from the rotatable shaft; and
E. an outlet (26) from the second pass (20).

2. The radial-flow rotor-stator mixer (10) of Claim 1, wherein the first stator comprises at least two ring-shaped stator teeth (33).

3. The radial-flow rotor-stator mixer (10) of Claim 1 or Claim 2, wherein the configuration of the second stator is the same as the first stator.

4. A process for producing a polymeric froth using the radial-flow, rotor-stator mixer as claimed in Claim 1,
the process comprising the steps of:
1. introducing through the primary inlet a first feed comprising a liquid into a first shear region of the first pass, the first feed comprising a monomer, prepolymer or polymer;
2. introducing through one or more of the secondary inlets a second feed comprising a fluid into a second shear region of the first pass, the second shear region of a greater shear than the shear of the first shear region;
3. forming a froth of the first and second feeds within the first pass;
4. transferring the froth from the first pass to the second pass; and
5. ejecting the froth through the outlet of the mixer.

5. The process of Claim 4 in which the fluid introduced into the second shear region of the first pass is a gas.

6. The process of Claim 4 in which the first feed comprises a polyol.

7. The process of Claim 6 in which the second feed comprises a monomer, prepolymer or polymer with isocyanate functionality.

8. The process of Claim 7 in which the second feed further comprises a surfactant and, optionally, a catalyst.

9. The process of Claim 8 in which an inert gas is introduced into the second shear region of the first pass.

## Patentansprüche

1. Ein Rotor/Stator-Mischer mit Radialdurchfluss (10), der Folgendes beinhaltet:
A. ein Gehäuse (13), das einen ersten Stator (16) und einen zweiten Stator (17) beinhaltet;
B. einen Rotor (12), der zwischen dem ersten Stator (16) und dem zweiten Stator (17) positioniert ist, um einen ersten Durchgang (19) zwischen dem Rotor und dem ersten Stator und einen zweiten Durchgang (20) zwischen dem Rotor und dem zweiten Stator innerhalb des Gehäuses (13) zu bilden und um zwischen dem ersten und dem zweiten Durchgang (19), (20) Fluidkommunikation bereitzustellen, wobei der Rotor (12) mit einer drehbaren Welle (11) verbunden ist;
C. einen primären Einlass (24) zu dem ersten Durchgang (19) in einem Bereich mit geringer Scherung;
D. nur vier sekundäre Einlässe (37, 38) zu dem ersten Durchgang (19) in einem oder mehreren Bereichen mit höherer Scherung als jene des primären Einlasses (24), unter der Bedingungen, dass drei der sekundären Einlässe (38) in gleichmäßigem Abstand um den ersten Stator angeordnet sind und mit dem ersten Durchgang (19) in der oder nahe der Maximaldistanz von der drehbaren Welle in Verbindung stehen; und
E. einen Auslass (26) aus dem zweiten Durchgang (20).

2. Rotor/Stator-Mischer mit Radialdurchfluss (10) gemäß Anspruch 1, wobei der erste Stator mindestens zwei ringförmige Statorzähne (33) beinhaltet.

3. Rotor/Stator-Mischer mit Radialdurchfluss (10) gemäß Anspruch 1 oder Anspruch 2, wobei die Konfiguration des zweiten Stators die gleiche ist wie jene des ersten Stators.

4. Ein Verfahren zum Herstellen eines Polymerschaums unter Verwendung des Rotor/Stator-Mischers mit Radialdurchfluss gemäß Anspruch 1,
wobei das Verfahren die folgenden Schritte beinhaltet:
1. Einführen durch den primären Einlass einer ersten Zufuhr, die eine Flüssigkeit beinhaltet, in einen ersten Scherungsbereich des ersten Durchgangs, wobei die erste Zufuhr ein Monomer, Präpolymer oder Polymer beinhaltet;
2. Einführen durch einen oder mehrere der sekundären Einlässe einer zweiten Zufuhr, die ein Fluid beinhaltet, in einen zweiten Scherungsbereich des ersten Durchgangs, wobei der zweite Scherungsbereich eine größere Scherung als die Scherung des ersten Scherungsbereichs aufweist;
3. Bilden eines Schaums aus der ersten und der zweiten Zufuhr innerhalb des ersten Durchgangs;
4. Überführen des Schaums von dem ersten Durchgang in den zweiten Durchgang;
und
5. Ausgeben des Schaums durch den Auslass des Mischers.

5. Verfahren gemäß Anspruch 4, wobei das in den zweiten Scherungsbereich des ersten Durchgangs eingeführte Fluid ein Gas ist.

6. Verfahren gemäß Anspruch 4, wobei die erste Zufuhr ein Polyol beinhaltet.

7. Verfahren gemäß Anspruch 6, wobei die zweite Zufuhr ein Monomer, Präpolymer oder Polymer mit Isocyanat-Funktionalität beinhaltet.

8. Verfahren gemäß Anspruch 7, wobei die zweite Zufuhr ferner ein Tensid und wahlweise einen Katalysator beinhaltet.

9. Verfahren gemäß Anspruch 8, wobei ein Inertgas in den zweiten Scherungsbereich des ersten Durchgangs eingeführt wird.

## Revendications

1. Un mélangeur rotor-stator à flux radial (10) comprenant :
A. un logement (13) comprenant un premier stator (16) et un deuxième stator (17) ;
B. un rotor (12) positionné entre le premier stator (16) et le deuxième stator (17) de façon à former un premier passage (19) entre le rotor et le premier stator et un deuxième passage (20) entre le rotor et le deuxième stator à l'intérieur du logement (13) et pour fournir une communication fluidique entre les premier et deuxième passages (19), (20), le rotor (12) étant raccordé à un arbre rotatif (11) ;
C. une entrée primaire (24) vers le premier passage (19) au niveau d'une région de faible cisaillement ;
D. seulement quatre entrées secondaires (37, 38) vers le premier passage (19) au niveau d'une ou de plusieurs régions de cisaillement plus fort que celui de l'entrée primaire (24) à la condition que trois des entrées secondaires (38) soient espacées de façon égale autour du premier stator et communiquent avec le premier passage (19) au niveau ou près de la distance maximale par rapport à l'arbre rotatif ; et
E. une sortie (26) à partir du deuxième passage (20).

2. Le mélangeur rotor-stator à flux radial (10) de la revendication 1, où le premier stator comprend au moins deux dents de stator en forme d'anneau (33).

3. Le mélangeur rotor-stator à flux radial (10) de la revendication 1 ou de la revendication 2, où la configuration du deuxième stator est la même que celle du premier stator.

4. Un processus pour produire une mousse polymère à l'aide du mélangeur rotor-stator à flux radial tel que revendiqué dans la revendication 1, le processus comprenant les étapes consistant à :
1. introduire par l'entrée primaire une première alimentation comprenant un liquide dans une première région de cisaillement du premier passage, la première alimentation comprenant un monomère, un prépolymère ou un polymère ;
2. introduire par une ou plusieurs des entrées secondaires une deuxième alimentation comprenant un fluide dans une deuxième région de cisaillement du premier passage, la deuxième région de cisaillement d'un cisaillement supérieur au cisaillement de la première région de cisaillement ;
3. former une mousse avec les première et deuxième alimentations à l'intérieur du premier passage ;
4. transférer la mousse du premier passage au deuxième passage ; et
5. éjecter la mousse par la sortie du mélangeur.

5. Le processus de la revendication 4 dans lequel le fluide introduit dans la deuxième région de cisaillement du premier passage est un gaz.

6. Le processus de la revendication 4 dans lequel la première alimentation comprend un polyol.

7. Le processus de la revendication 6 dans lequel la deuxième alimentation comprend un monomère, un prépolymère ou un polymère avec une fonctionnalité isocyanate.

8. Le processus de la revendication 7 dans lequel la deuxième alimentation comprend en outre un tensioactif et, facultativement, un catalyseur.

9. Le processus de la revendication 8 dans lequel un gaz inerte est introduit dans la deuxième région de cisaillement du premier passage.
